# EUROPEAN PATENT SPECIFICATION

(11) **EP 1 718 164 B1**
(45) Date of publication and mention of the grant of the patent: **29.09.2010**
(21) Application number: 05723966.7
(22) Date of filing: 25.02.2005
(51) Int. Cl.: A23G 3/32

(54) **CONFECTIONS CONTAINING A BLEND OF PHYSILOGICAL COOLING AGENTS**
SÜSSWAREN, DIE EINE MISCHUNG VON PHYSIOLOGISCHEN KÜHLMITTELN ENTHALTEN
CONFISERIE CONTENANT UN MELANGE D'AGENTS RAFRAICHISSANTS PHYSIOLOGIQUES

(30) Priority: 26.02.2004 US 548471 P
(43) Date of publication of application: 08.11.2006
(73) Proprietor: WM. WRIGLEY JR. COMPANY, Chicago, Illinois 60611 (US)
(72) Inventor: JOHNSON, Sonya, S., LaGrange Highlands, IL 60525 (US); STAWSKI, Barbara, Z., Forest Park, IL 60130 (US); SHELDON, Glorio, T., Hammond, In 46324 (US); YATKA, Robert, J., Orland Park, IL 60462 (US)
(74) Representative: Hayes, Adrian Chetwynd
(86) International application number: PCT/US2005/006318
(87) International publication number: WO 2005/082154

(56) References cited:
- WO-A-2004/019922
- WO-A-2004/045590
- US-A1- 2004 175 489

## Description

### BACKGROUND OF THE INVENTION

The present invention relates to confectionery, particularly chewing gum compositions, and methods of producing chewing gum and other confectionery products. More particularly, the invention relates to producing chewing gum and other confectionery containing a blend of physiological cooling agents. The physiological cooling agents may be treated to control their release and enhance shelf life stability. Also, the blend of physiological cooling agents may be added by themselves or as part of a cooling flavor composition, and used in confectionery coatings.

Several known compounds have what can be characterized as a "cooling" activity, and are referred to in the art as "physiological cooling agents." Physiological cooling agents are perceived as cold or cool when contacted with the human body and, in particular, with the mucous membranes of the mouth, nose and throat.

Efforts have been directed at perfecting the use of physiological cooling agents within chewing gum and other confectionery formulations to enhance flavor composition and control their release to enhance the flavor of chewing gum or other confectionery.

U.S. Patent No. 6,627,233 discloses a number of physiological cooling agents and combinations of physiological cooling agents, including N-2,3-trimethyl-2-isapropyl butanamide (called WS-23), as well as their use in chewing gum. The physiological cooling agents may be treated so as to modify their release from the chewing gum, and may be used in a chewing gum coating.

Peppermint oil is currently used to create a "cooling" in oral products such as toothpaste, mouthwash, confections, including chewing gum and candy, and other food products. Peppermint oil generally comprises about 45% *l*-menthol, about 20% menthone, about 5% menthyl acetate, about 5% eucalyptol and many other constituents. Peppermint oil is even used in non-peppermint products, such as spearmint or wintergreen flavored products, in order to create this desired cooling effect. However, peppermint notes are then found in the resulting non-peppermint flavored products.

*l*-Menthol is also known for its physiological cooling effect on the skin and mucous membranes of the mouth. Being a major constituent of peppermint oil, *l*-menthol has been used extensively in foods, beverages, dentrifices, mouthwashes, toiletries, lotions and the like. The disadvantages of using *l*-menthol, however, are its strong minty odor and the harsh notes it imparts to compositions in which it is found.

A need, therefore, exists for a cooling flavor composition that will contribute a long-lasting cooling sensation to products in which it is found without the unwanted harshness or flavor characteristics that come from adding *l*-menthol.

It would be desirable to provide a high flavor impact chewing gum or other confection that does not manifest the harsh notes normally associated with some confections, particularly chewing gum. It would also be desirable to provide a clean, high-quality flavor confection with a good cooling effect.

The present invention also relates to coated confections, such as chewing gum. Chewing gums and other confections and are frequently covered with hard or soft coatings. The coatings provide an opportunity for the manufacturer to vary the taste, appearance, mouth-feel and nutritional value of the confection.

For example, some consumers prefer a burst of intense flavor over the slow, gentle flavor release normally associated with confections such as chewing gum. In order to provide a favorable flavor impact, manufacturers have added flavors to the coating of a coated products. These flavors include spearmint flavor, peppermint flavor, wintergreen flavor and fruit flavors. In addition, very strong flavors such as *l*-menthol have often been used to provide a burst of flavor. However, at concentrations effective to provide a burst of flavor, *l*-menthol or mint flavors also manifest a bitter, harsh, burning taste (hereinafter "harsh notes").

The harsh notes are particularly acute with sugarless gums and other confections. In the case of sugar coated confections, including gum, the sugar masks many of the harsh notes of *l*-menthol and mint flavors (although high levels of *l*-menthol or mint flavors can still manifest the harsh notes). However, recent efforts to produce sugarless coated gums and other confections have highlighted the difficulties of providing an initial burst of flavor without the harsh notes associated with traditional flavoring.

Coating with xylitol is described in U.S. Patent No. 4,105,801; U.S. Patent No. 4,127,677; U.S. Patent No. 4,681,766; U.S. Patent No. 4,786,511; and U.S. Patent No. 4,828,845.

A number of patents have been published that use various procedures to coat with sorbitol, including G.B. Patent No. 2,115,672; U.S. Patent No. 4,317,838; and U.S. Patent No. 4,753,790. A successful sorbitol hard coating was reported in U.S. Patent No. 4,423,086, particularly when the sorbitol was at least 99% D-sorbitol. However, the quality of coating never approached the quality of typical xylitol coatings.

Other coating patents that teach alternative polyols to xylitol include: U.S. Patent No. 4,840,797, which discloses a maltitol coating which required over 95% maltitol to obtain a good quality coating on pellet gum; U.S. Patents Nos. 5,248,508 and 4,792,453, which disclose a hydrogenated isomaltulose coating; and U.S. Patent No. 5,603,970, which discloses an erythritol coating.

Still other patents teach partially replacing the xylitol with sorbitol, lactitol, or maltitol. However, these cannot be applied in the same solution, but must be applied by alternating solutions. In other words, a solution of one polyol is applied, then another solution of another polyol is applied. These patents include: U.S. Patent No. 5,270,061; U.S. Patent No. 5,376,389; PCT Application Nos. PCT/US93/09354 (published as WO95/08925); PCT/US94/10406 (published as WO95/07625); and PCT/US93/08730 (published as WO95/07622).

A booklet entitled "The Evaluation of Chewing Gum -- Xylitol and the Prevention of Dental Caries" published in 1985 by Xyrofin describes a coating formed by panning with a solution containing xylitol and up to 10% sorbitol. U.S. Patent No. 5,536,511 discloses a coating that comprises co-crystallized xylitol and erythritol. In an approach different from panning from a solution, U.S. Patent No. 4,146,653 discloses a molten blend of xylitol and sorbitol that are used to form a coating.

U.S. Patent No. 5,409,715 discloses coating chewing gum with various materials, including waxes, lipids, fatty acids, fats, oils, cellulose derivatives, modified starch, dextrin, gelatin, zein, vegetable gums, proteins, edible polymers, edible plastic film, maltodextrins, polyols, low calorie carbohydrate bulking agents, shellac and combinations thereof. Documents WO 2004/045590 and WO 2004/019922 disclose cooling compositions containing methyl glutarate and isopulegol.

It would be desirable to provide a high flavor impact coating for confection, including chewing gum, that does not manifest the harsh notes normally associated with such coatings. It would also be desirable to provide a clean, high-quality flavor coated confection with a good cooling effect, while reducing or eliminating the xylitol currently preferred in sugarless coatings.

### SUMMARY OF THE INVENTION

This invention incorporates a combination of physiological cooling agents into confections including chewing gum. One preferred embodiment of the invention provides confections, particularly chewing gum, having a clean, cool sensation imparted by a cooling flavor composition that includes a blend of physiological cooling agents. Another preferred embodiment also contains a flavor, and a combination of physiological cooling agents which have been treated so as to modify their release from the chewing gum. The result is a synergy between the physiological cooling agents and the flavor, which provides a high flavor impact at a lower concentration of flavor. Thus, with either or both aspects of the present invention, confections can be made with a long lasting cooling sensation without unwanted harshness or flavor characteristics. The confection may have a high flavor impact, as well as a clean, high quality flavor with good cooling effect.

In other embodiments of the invention, the cooling flavor compositions may also be used in other comestibles or even topical products such as creams and lotions.

In a one aspect, the present invention is a confection comprising menthyl glutarate and one or more other physiological cooling agents selected from the group consisting of p-menthane-3,8-diol or a mixture of p-menthane-3,8-diol and l-isopulegol.

In another aspect, the invention is a cooling flavor composition which imparts a physiological cooling effect to oral compositions in which it is used, comprising menthyl glutarate and one or more other physiological cooling agents selected from the group consisting of p-menthane-3,8-diol or a mixture of p-menthane-3,8-diol and l-isopulegol.

In yet another aspect, the invention is a coated confection wherein the coating comprises a coating material, menthyl glutarate and one or more other physiological cooling agents selected from the group consisting of p-menthane-3,8-diol or a mixture of p-menthane-3,8-diol and l-isopulegol.

In still another aspect, the invention is a chewing gum composition comprising a) 5% to 95% gum base; b) 5% to 95% bulking and sweetening agent; and c) 0.1 to 10% flavoring agent wherein the flavoring agent comprises menthyl glutarate and one or more other physiological cooling agents selected from the group consisting of p-menthane-3,8-diol or a mixture of p-menthane-3,8-diol and l-isopulegol.

In preferred embodiments the combination of physiological cooling agents is treated to have a modified-release. The controlled release combination of physiological cooling agents is obtained by modifying the cooling agents by encapsulation, partial encapsulation or partial coating, entrapment or absorption with water-soluble materials or water-insoluble materials. The procedures for modifying the physiological cooling agents include spray drying, spray chilling, fluid-bed coating, coacervation, extrusion, and other agglomerating and standard encapsulating techniques. The cooling agents may also be absorbed onto an inert or water-insoluble material. The cooling agents may be modified in a multiple step process comprising any of the processes noted.

One preferred embodiment of the invention provides a confectionary coating having a clean, cool sensation in which xylitol is replaced, in part or in whole, by a less expensive coating material.

Another preferred embodiment also contains a flavor, where the synergy between the physiological cooling agents and the flavor provides a high flavor impact at a lower concentration of flavor. Adding the physiological cooling agents provides the coated confection with an unexpected, high-flavor impact where the harsh notes have been reduced or eliminated. This is particularly valuable for sugarless confections where the harsh notes of the flavor are not masked by sugar.

The foregoing and other features and advantages of the present invention will become apparent from the following detailed description of the presently preferred embodiments, when read in conjunction with the accompanying examples.

### DETAILED DESCRIPTION OF THE PRESENTLY PREFERRED EMBODIMENTS OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In the context of this invention, chewing gum refers to chewing gum, bubble gum and the like. Moreover, all percentages are based on weight percentages unless otherwise specified. Further, although some terms are referred to in the singular, it is understood that such references may also encompass the plural. For example, although chewing gum coating is referred to in the singular, it is understood that coated chewing gum normally contains multiple layers of coating. Therefore a phrase that refers to "the coating," refers to one or more layers of coating.

The composition of a chewing gum tends to suppress the release of its flavors. Although a slow flavor release is desirable in many instances, some consumers prefer a burst of intense flavor. One method to provide a chewing gum with a greater flavor impact is the addition of encapsulated flavor to a chewing gum. For example, for a cool and refreshing taste, cooling flavors such as encapsulated *l*-menthol and/or mint flavors are added to chewing gum. An *l*-menthol/mint combination is disclosed in U.S. Patent No. 4,724,151.

However, the improved flavor impact of adding cooling flavors to the chewing gum or other confections is somewhat offset by the disadvantage of the bitter, harsh, burning sensations associated with high concentrations of such flavors. This disadvantage is particularly acute for sugarless candies and gum, since sugar tends to mask the harsh notes.

The inventors have found that adding a combination of physiological cooling agents or a combination of cooling agents that have a modified release from the chewing gum provides a favorable flavor impact. As a result, the inventors are able to reduce or eliminate the harsh notes associated with the prior art high flavor-impact chewing gums and candies.

By wadding a combination of physiological cooling agents to a *l*-menthol or mint type flavored confection, one can obtain a strong cooling and clean minty flavor, without the higher concentrations of *l*-menthol or mint flavors required in the prior art. Also, the fast release encapsulation of a combination of physiological cooling agents complement the mint flavors to give a high impact of flavor and cooling normally found in chewing gum and confections. This cooling effect is like *l*-menthol cooling, but without the bitterness associated with *l*-menthol.

Another method to provide a confection with a greater flavor impact is the addition of flavor to the coating of a coated confection. For example, for a cool and refreshing taste, cooling flavors such as *l*-menthol and/or mint flavors are added to the coating of confection.

However, the improved flavor impact of adding cooling flavors to the confectionery coating is somewhat offset by the disadvantage of the bitter, harsh, burning sensations associated with high concentrations of such flavors. This disadvantage is particularly acute for sugarless products, since sugar tends to mask the harsh notes.

Adding a blend of physiological cooling agents to the coating provides a favorable flavor impact. As a result, it is possible to reduce or eliminate the harsh notes associated with the prior art high flavor-impact coated confections, even in the case of sugarless, coated products.

By adding a blend of physiological cooling agents to a *l*-menthol or mint type flavored confections, one can obtain a strong cooling and clean minty flavor, without the higher concentrations of *l*-menthol or mint flavors required in prior art coatings. Also, the physiological cooling agents complement the mint flavors to give a high impact of flavor and cooling normally found in confections. This cooling effect is like *l*-menthol cooling, but without the bitterness associated with *l*-menthol.

Coated chewing gums of the present invention may be made with a variety of chewing gum compositions. The chewing gum is prepared as conventional chewing gum, but formed into pellets or balls. The pellets/balls can then be coated by a variety of methods known in the art, such as conventional panning methods to coat chewing gum. The coating is generally applied in multiple layers, where the composition of one layer is not necessarily the composition of the other layers.

The coating of the preferred embodiment of the invention contains at least a coating material and a blend of physiological cooling agents. It may also contain other ingredients such as flavors, artificial sweeteners and dispersing agents, coloring agents, film formers and binding agents.

Coating material constitutes the substantial portion of the chewing gum coating. Examples of coating material include sugars such as sucrose, maltose, dextrose and glucose syrup; polyols such as maltitol, lactitol, xylitol, mannitol, erythritol, sorbitol, hydrogenated isomaltulose and hydrogenated starch hydrolysates; and combinations thereof.

For sugarless gums, xylitol coatings have become very popular because xylitol has about the same sweetness level as sugar and a cooling ability due to its endothermic heat of solvation. With this sweetness, xylitol masks the harsh notes of high impact flavors such as *l*-menthol and mint flavors. At the same time, its cooling effect complements the cooling effect of the cooling flavors. As a result, xylitol provides a clean, high-quality cooling effect. When used with physiological cooling agents, a synergistic cooling effect may be noted with xylitol. However, because of its expense, various efforts have been made to replace xylitol in coatings with a less expensive ingredient, such as another polyol.

One problem with polyol substitutes for xylitol is that they are generally much less sweet than xylitol or sugar. In the presence of high levels of flavor, the polyol substitutes generally provide a coated product with a bitter, unpleasant taste. To some degree, high intensity sweeteners may be used to counteract bitterness, but these also may have some objectionable taste. Also, some of these polyols themselves may contribute to a bitter taste.

Physiological cooling agents encompasses any number of physiological cooling agents. However, in the context of this invention, the term "physiological cooling agent" does not include traditional flavor-derivatives such as *l*-menthol or menthone. Preferred physiological cooling agents do not have a perceptible flavor of their own, but simply provide a cooling effect.

Since the physiological cooling agents do not have their own perceptible flavor, they can be used with other types of flavors to offer new and unique advantages, such as breath freshening. Most confectionery products which are promoted for breath freshening are mint flavored products which contain moderate to high levels of *l*-menthol. *l*-Menthol is a component of peppermint oil which has a cooling property which provides to the consumer a perception of freshness in the oral cavity.

Paradoxically, some cinnamon flavored products have also been marketed for breath freshening based on the physiological heating provided by cinnamic aldehyde and other spice flavor components. In some cases, *l*-menthol or peppermint oil has been added to cinnamon flavored products to provide a cooling sensation to blend with the heating sensation and enhance breath-freshening. While some consumers enjoy the presence of a mint note in cinnamon confections, others describe the flavor as "muddy", "dirty" and "confused", preferring a "pure" cinnamon flavor.

Many consumers, who may not appreciate the addition of mint flavor to cinnamon flavored candies and chewing gums, do enjoy the addition of a non-menthol, physiological cooling agent in such products. Furthermore, the preferred inventive products have greatly enhanced breath freshening properties compared to cinnamon flavored confections without physiological cooling agents.

The confectionery products of the invention can be any new or existing type of product in that category. Hard candies, hard or soft pan coated items, chewy confections and powdered candies are specifically contemplated. Chewing gum is a preferred embodiment.

While there are references that disclose the use of physiological cooling agents in chewing gum and other confections, unique combinations and controlled release are new areas of interest. Because a flavor imparts a distinct and unique sensation when it is used in a chewing gum, some combinations of the physiological cooling agents offer unique advantages and may be combined with various types of flavors or with various methods of encapsulation and entrapment for controlled release.

Several U.S. and foreign references disclose specific compounds and classes of compounds that are physiological cooling agents. Some of these disclose the use of physiological cooling agents in chewing gum. These include:

U.S. Patent No. 5,451,404 (a ketal combined with another coolant (*l*-menthol or carboxamides));

U.S. Patent No. 5,372,824 (physiological cooling agents and reduced *l*-menthol);

U.S. Patent No. 5,348,750 (menthone ketals);

U.S. Patent No. 5,326,574 (a spray dried 3-*l*-menthoxypropane-1,2-diol);

U.S. Patent No. 5,266,592 (menthone glycerol ketals);

U.S. Patent No. 5,165,943 (a cyclodextrin complex with physiological cooling agents);

U.S. Patent No. 5,009,893 (p-menthane carboxamide physiological cooling agent with *l*-menthol for reduced bitterness);

U.S. Patent No. 4,45 9,425 (3-*l*-menthoxypropane-1,2-diol);

U.S. Patent No. 4,296,093 (substituted cyclohexanamides);

U.S. Patents Nos. 4,248,859 and 4,318,900 (alkyl substituted alicyclic carboxylic acids, esters or amides);

U.S. Patents Nos. 4,157,384 and 4,029,759 (various 3-substituted p-menthanes);

U.S. Patent No. 4,081,480 (alpha-oxy(oxo)mercaptan alkanes);

U.S. Patent No. 4,070,449 (sulphoxides and sulphones);

U.S. Patents Nos. 4,060,091; 4,190,643 and 4,136,163 (substituted p-menthane-3-carboxamides);

U.S. Patents Nos. 4,153,679; 4,296,255 and 4,230,688 (acyclic carboxamides);

U.S. Patent No. 4,034,109 (acyclic sulphonamides and sulphinamides);

U.S. Patent No. 4,033,994 (p-menthane-3-carboxylates);

U.S. Patents Nos. 3,793,446 and 3,644,613 (ketoesters of menthol);

U.S. Patent No. 3,720,762 (spilanthol with *l*-menthol or peppermint oil);

Canadian Patent No. 2,101,790 (carbonic acids having free polar groups);

German Patent No. 2,608,226 (menthyl lactate);

German Patent No. 2,433,165 (N-acetylglycine menthyl ester);

French Patent No. 2,577,922 (L-menthyl-3-hydroxybutyrate);

Japanese Patent No. 94 /065023 (*l*-2-isopropenyl-5-methylcyclohexanol, also called *l*-isopulegol;

Great Britain Patent No. 1,502,680 (bicyclic acids, esters, amides and substituted menthanols);

Great Britain Patent No. 1,476,351 (cyclic and acyclic amides, ureas and sulphonamides);

Great Britain Patent No. 1,442,998 (trialkyl-substituted cyclohexane carboxamides);

Great Britain Patents Nos. 1,421,744 and 1,421,743 (novel amides);

Great Britain Patent No. 1,411,786 (cyclohexanamides);

Great Britain Patent No. 1,404,596 (acyclic secondary and tertiary alkanols);

PCT Publication No. WO 97/07771 (menthyl succinate and carboxamides);

PCT Publication No. WO 96/28133 (coolant composition for comestibles);

PCT Publication No. WO 96/17524 (a cooling composition comprising N-substituted p-menthane carboxamides and *l*-menthol);

PCT Publication No. WO 94/010117 (cyclohexanol derivatives); and

U.S. Patent No. 3,639,569 (physiological cooling agents).

Particular examples of physiological cooling agents include:
1) substituted p-menthanes, substituted p-menthane-carboxamides (e.g., N-ethyl-p-menthane-3-carboxamide (FEMA 3455)), acyclic carboxamides, substituted cyclohexanamides, substituted cyclohexane carboxamides, substituted ureas and sulphonamides, and substituted menthanols (all from Wilkinson Sword);
2) hydroxymethyl and hydroxyethyl derivatives of p-menthane (from Lever Bros.);
3) menthyl succinate;
4) 2-mercapto-cyclo-decanone (from International Flavors and Fragrances);
5) *l*-2-isopropenyl-5-meflylcyclohexanol (from Hisamitsu. Pharmaceuticals, hereinafter "*l*-isopulegol," FEMA 2962);
6) hydroxycarboxylic acids with 2-6 carbon atoms;
7) menthone glycerol ketals (FEMA 3807, tradename FRESCOLAT™ type MGA);
8) menthol propylene glycol carbonate (FEMA 3806);
9) menthol ethylene glycol carbonate (FEMA 3805);
10) 3-*l*-mhnEmwmpme-1,2-diol (from Takasago, FEMA 3784, (hereinafter "TCA"));
11) menthyl lactate; (from Haarman & Reimer, FEMA 3748, tradename FRESCOLAT™ type ML); and
12) menthyl glutarate (menthyl glutarate as used herein encompasses mono-*l*-menthyl glutarate and mixtures of mono-*l*-menthyl glutarate with common impurities such as di-menthyl glutarate),

The combination of menthyl glutarate and one or more other physiological cooling agents selected from the group consisting of p-menthane-3,8-diol or a mixture of p-menthane-3,8-diol and l-isopulegol provide the foundation of the cooling composition of the present invention. While any of the above-disclosed physiological cooling agents may also be used in the combination of physiological cooling agents, the following may particularly be used:
1) N-subsftftd p-menthane carboxamides;
2) acyclic carboxamides (AC), such as those disclosed in U.S. Patents Nos. 4,296,255; 4,230,688; and 4,153,679; all assigned to Wilkinson Sword;
3) menthone glycerol ketal (MGK);
4) menthyl lactate (ML);
5) methyl succinate (MS); and
6) 3-*l*-menthmypropane-1,2-diol (TCA).
*l*-Menmol may also be included in the combination.

It was discovered that a blend of menthyl glutarate, with *l*-isopulegol formed a cooling composition with properties similar to WS-23, a high quality stand alone cooling agent when used in chewing gum. A blend of menthyl glutarate and p-menthane-3,8-diol (hereinafter called "menthanediol") may provide the same benefit. It was also surprisingly discovered that the three way mixture of *l*-isopulegol, menthyl glutarate and menthanediol gave high quality cooling similar to WS-23 in hard candy. In candy all three physiological cooling agents are preferably used. In that case, the ratio of menthyl glutarate to the combination of *l*-isopulegol and menthanediol is between 20:3 and 60:3, and preferably 40:3. In candy using all three physiological cooling agents, the ratio of *l*-isopulegol to menthanediol is preferably between 1:3 and 3:1, and most preferably 1:1.

The concentration of physiological cooling agents will depend on the intensity of the physiological cooling agents and the desired cooling effect. In general the concentration of cooling agents used is between 0.001% and 2% by weight of the chewing gum. The preferred concentration of cooling agents is between 0.01% and 1.0%, more preferably between 0.02% and 0.5% in chewing gum, and between 0.001% and 0.1% in candy. The confection will preferably comprise at least 5 ppm physiological cooling agents. Chewing gum products will preferably comprise at least 25 ppm physiological cooling agents, and at least 5 ppm *l*-isopulegol.

The present invention contemplates that two or three physiological cooling agents, specifically *l*-isopulegol, menthyl glutarate, and menthanediol, may be added to the flavor used to make the chewing gum or candy. On the other hand, the flavor and cooling agents may be added separately anywhere within the manufacturing process for making a chewing gum or candy product.

These flavors include any flavor which is of food acceptable quality commonly known in the art such as essential oils, synthetic flavors or mixtures thereof. Such flavors include, but are not limited to, oils derived from plants and fruits such as citrus oils, fruit essence, peppermint oil, spearmint oil, eucalyptus, other mint oils, clove oil, oil of wintergreen, cinnamic aldehyde, anise and the like. Flavors that are very strong, such as menthol flavors, are also contemplated in this invention. Preferred flavors include cooling flavors such as peppermint, eucalyptus, *l*-menthol, wintergreen and fruity-mint; non-cooling flavors such as spearmint and cinnamon; and combinations thereof.

Artificial flavor components are also contemplated by the present invention. Those of ordinary skill in the art will recognize that natural and artificial flavors may be combined in any sensorially acceptable blend. All such flavors and blends are contemplated by the present invention

The flavor may be added to the chewing gum formula in an amount such that it will contain from 0.1% to 10% flavor, preferably from 0.2% to 3.0% flavor, and most preferably 0.5% to 2% flavor. Somewhat lower flavor levels are used in candies.

For *l-*menthol flavored candy and chewing gum, the previously noted combination of physiological cooling agents allows for a reduced overall concentration of *l*-menthol. However, it does not completely eliminate *l*-menthol, because *l*-menthol has a very identifiable unique taste and cooling sensation. Hence, in the case of *l*-menthol flavor, the physiological cooling agents only enhance the cooling while reducing the *l*-menthyl bitterness.

The present invention thus is also directed to novel cooling flavor compositions that contribute a long-lasting cool sensation. The above mentioned cooling flavor compositions may be substituted for peppermint oil in non-Peppermint products, resulting in added coolness without harshness or unwanted flavor characteristics. They can, of course, also be used in peppermint flavored products.

Because the cooling flavor compositions of the present invention will not impart an unwanted peppermint flavor to non-peppermint products, these compositions may be used to add coolness to fruit and other flavors.

Physiological cooling agents generally release slowly from chewing gum during the early stages of mastication of the gum because of their low solubility in water. However, some like TCA are moderately fast release, others like WS-3, WS-23 are moderately slow release, and others like menthone glycerol ketal, menthyl lactate and menthyl succinate are very slow release.

The specific combination of cooling agents mentioned above may not only be synergistic, but may also provide both moderate release and slow release to give flavor impact and flavor extension. Physical modifications of the physiological cooling agents by encapsulation with another substrate will also modify their release in chewing gum by modifying the solubility or dissolution rate. Any standard technique which gives partial or full encapsulation of the combination of physiological cooling agents can be used. These techniques include, but are not limited to, spray drying, spray chilling, fluid-bed coating, and coacervation. These encapsulation techniques that give partial encapsulation or full encapsulation can be used individually or in any combination in a single step process or multiple step process. Generally, a modified release of physiological cooling agents is obtained in multistep processes like spray drying the combined physiological cooling agents and then fluid-bed coating the resultant powder.

The four methods to use to obtain a modified release of physiological cooling agents are (1) encapsulation by spray drying, fluid-bed coating, spray chilling and coacervation to give full or partial encapsulation; (2) agglomeration to give partial encapsulation; (3) fixation or absorption which also gives partial encapsulation; and (4) entrapment by extrusion. These four methods, combined in any usable manner which physically isolates the physiological cooling agents, modifies their dissolvability or modifies the release of physiological cooling agents are included in this invention.

The previously described cooling flavor compositions and encapsulated, agglomerated or absorbed physiological cooling agents may readily be incorporated into a chewing gum composition. Generally the physiological cooling agents will be added to the gum in either the form of a cooling flavor composition or as part of a modified release combination of physiological cooling agents. However, both of these aspects of the invention may be used in the same gum formula, and the cooling flavor composition itself or its individual components may be treated to have a modified release. The remainder of the chewing gum ingredients are noncritical to the present invention. That is, the cooling flavor composition and/or coated particles of physiological cooling agents can be incorporated into conventional chewing gum formulation in a conventional manner. The cooling flavor composition and coated physiological cooling agents may be used in either regular chewing gum or bubble gum.

In other embodiments of this invention, particularly coatings of chewing gum, the concentration of physiological cooling agents will depend on the intensity of the physiological cooling agents and the desired cooling effect. In general the concentration of cooling agents used is between 0.001% and 1% by weight of coating. The preferred concentration of cooling agents is between 0.01% and 0.5%, more preferably between 0.02% and 0.2%. Lower levels of cooling agents are used in candies.

The present invention contemplates that one or more flavors may be added to the syrup used to make the coating, or applied to the gum center while the syrup coating is drying, or after the coating has dried. Furthermore, the flavor may be applied anywhere within the sequence of coats, for example, after the third, twelfth, eighteenth, etc., coats.

These flavors include any flavor which is of food acceptable quality, including the flavors described earlier for use in chewing gum. The flavor may be added to the coating syrup in an amount such that the coating will contain from 0.2% to 1.2% flavor and preferably, from 0.7% to 1.0% flavor.

For *l*-menthyl flavored coatings, this concentration of the above noted physiological cooling agents allows a reduced overall concentration of *l*-mmtbol. However, it does not completely eliminate *l*-menthol, because *l*-mentliol has a very identifiable unique taste and cooling sensation. Hence, in the case of *l*-menthol flavor, the physiological cooling agents only enhance the cooling while reducing the *l*-menthol bitterness.

Artificial sweeteners contemplated for use in the coating include but are not limited to synthetic substances, saccharin, thaumatin, alitame, saccharin salts, aspartame, sucralose and acesulfame-K. The artificial sweetener may be added to the coating syrup in an amount such that the coating will contain from 0.05% to 0.3%, and preferably from 0.10% to 0.15% artificial sweetener.

Dispersing agents are often added to syrup coatings for the purpose of whitening and tack reduction. Dispersing agents contemplated by the present invention to be employed in the coating syrup include titanium dioxide, talc, or any other antistick compound. Titanium dioxide is a presently preferred dispersing agent of the present invention. The dispersing agent may be added to the coating syrup in amounts such that the coating will contain from 0.1 % to 1.0%, and preferably from 0.3% to 0.6% of the agent.

Coloring agents are preferably added directly to the syrup in the dye or lake form. Coloring agent contemplated by the present invention include food quality dyes. Film formers preferably added to the syrup include methyl cellulose, gelatins, hydroxypropyl cellulose, ethyl cellulose, hydroxyethyl cellulose, carboxymethyl cellulose and the like and combinations thereof. Binding agents may be added either as an initial coating on the chewing gum center or may be added directly into the syrup. Binding agents contemplated by the present invention include gum arabic, alginate, cellulosics, vegetable gums and the like.

Conventional panning procedures generally use sucrose as the coating material, but recent advances in panning have allowed the use of other carbohydrate materials to be used in the place of sucrose. Some of these components include, but are not limited to, dextrose, maltose, erythritol, xylitol, hydrogenated isomaltulose, maltitol and other new polyols or a combination thereof.

The coating material may be blended with panning modifiers including, but not limited to, gum arabic, maltodextrins, corn syrup, gelatin, cellulose type materials like carboxymethyl cellulose or hydroxymethyl cellulose, starch and modified starches, vegetable gums like alginates, locust bean gum, guar gum and gum tragacanth, insoluble carbonates like calcium carbonate or magnesium carbonate, and talc. Antitack agents may also be added as panning modifiers, which allow the use of a variety of carbohydrates and sugar alcohols to be used in the development of new panned or coated gum products.

The chewing gum center of the present invention follows the general pattern outlined below. These centers may contain the above noted combination of physiological cooling agents.

In general, a chewing gum center composition or other chewing gum compositions typically contain a chewable gum base portion which is essentially free of water and is water-insoluble, a water-soluble bulk portion and flavors which are typically water insoluble. The water-soluble portion dissipates with a portion of the flavor over a period of time during chewing. The gum base portion is retained in the mouth throughout the chew.

The insoluble gum base generally comprises elastomers, elastomer solvents, plasticizers, waxes, emulsifiers and inorganic fillers. Plastic polymers, such as polyvinyl acetate, which behave somewhat as plasticizers, are also often included. Other plastic polymers that may be used include polyvinyl laureate, polyvinyl alcohol and polyvinyl pyrrolidone.

Elastomers may include polyisobutylene, butyl rubber, (isobutylene-isoprene copolymer) and styrene butadiene rubber, as well as natural latexes such as chicle. Elastomer solvents are often resins such as terpene resins. Plasticizers, sometimes called softeners, are typically fats and oils, including tallow, hydrogenated and partially hydrogenated vegetable oils, and coca butter. Commonly employed waxes include paraffin, microcrystalline and natural waxes such as beeswax and carnauba. Microcrystalline waxes, especially those with a high degree of crystallinity, may be considered bodying agents or textural modifiers.

According to the preferred embodiment of the present invention, the insoluble gum base constitutes between 5% to 95% by weight of the gum. More preferably the insoluble gum base comprises between 10% and 50% by weight of the gum and most preferably 20% to 35% by weight of the gum.

The gum base typically also includes a filler component. The filler component may be calcium carbonate, magnesium carbonate, talc, dicalcium phosphate or the like. The filler may constitute between 5% and 60% by weight of the gum base. Preferably the filler comprises 5% to 50% by weight of the gum base.

Gum bases typically also contain softeners including glycerol monostearate and glycerol triacetate. Gum bases may also contain optional ingredients such as antioxidants, colors, and emulsifiers. The present invention contemplates employing any commercially acceptable gum base.

The water-soluble portion of the chewing gum may further comprise softeners, sweeteners, flavors, physiological cooling agents and combinations thereof. The sweeteners often fulfill the role of bulking agents in the gum. The bulking agents typically comprise 5% to 95% of the gum composition.

Softeners are added to the chewing gum in order to optimize the chewability and mouth feel of the gum. Softeners, also known in the art as plasticizers or plasticizing agents, generally constitute between 0.5% to 15% of the chewing gum. Softeners contemplated by the present invention include glycerin, lecithin and combinations thereof. Further, aqueous sweetener solutions such as those containing sorbitol, hydrogenated starch hydrolysate, corn syrup and combinations thereof may be used as softeners and binding agents in gum.

As mentioned above, the cooling flavor compositions or coated physiological cooling agents of the present invention will most likely be used in sugarless gum formulations. However, formulations containing sugar are also within the scope of the invention. Sugar sweeteners generally include saccharide-containing components commonly known in the chewing gum art which comprise, but are not limited to, sucrose, dextrose, maltose, dextrin, dried invert sugar, fructose, galactose, corn syrup solids and the like, alone or in any combination.

The cooling flavor compositions and physiological cooling agents of the present invention can also be used in combination with sugarless sweeteners. Generally sugarless sweeteners include components with sweetening characteristic but which are devoid of the commonly known sugars and comprise, but are not limited to, sugar alcohols such as sorbitol, hydrogenated isomaltulose, mannitol, xylitol, lactitol, erythritol, hydrogenated starch hydrolysate, maltitol and the like alone or in any combination.

Depending on the particular sweetness release profile and shelf-stability needed, coated or uncoated high-intensity sweeteners may be used in the chewing gum center or in the coating. High-intensity sweeteners, preferably aspartame, may be used at levels from 0.01 % to 3.0%. Encapsulated aspartame is a high intensity sweetener with improved stability and release characteristics, as compared to free aspartame. Free aspartame can also be added, and a combination of some free and encapsulated aspartame is preferred when aspartame is used.

Optional ingredients such as colors, emulsifiers and pharmaceutical agents may also be added as separate components of the chewing gum composition, or added as part of the gum base.

Aqueous syrups, such as corn syrup and hydrogenated corn syrup may be used, particularly if their moisture content is reduced. This can preferably be done by coevaporating the aqueous syrup with a plasticizer, such as glycerin or propylene glycol, to a moisture content of less than 10%. Preferred compositions include hydrogenated starch hydrolysate solids and glycerin. Such syrups and their methods of preparation are discussed in detail in U.S. Patent No. 4,671,967.

A preferred method of manufacturing chewing gum according to the present invention is by sequentially adding the various chewing gum ingredients to any commercially available mixer known in the art. After the ingredients have been thoroughly mixed, the gum is discharged from the mixer and shaped into the desired form such as by rolling into sheets and cutting into sticks, extruding into chunks, or casting into pellets.

Generally, the ingredients are mixed by first melting the gum base and adding it to the running mixer. The base may also be melted in the mixer itself. Color or emulsifiers may also be added at this time, along with syrup and a portion of the bulking agent. Further portions of the bulking agent may then be added to the mixer. A flavoring agent is typically added with the final portion of the bulking agent. The cooling flavor composition of the present invention are preferably added as part of the flavor addition. The coated physiological cooling agents of the present invention are preferably added after the final portion of bulking agent and flavor have been added. The entire mixing procedure typically takes from five to fifteen minutes, but longer mixing times may sometime be required. Those skilled in the art will recognize that many variations of the above described procedures may be followed.

When the physiological cooling agents are used as part of a cooling flavor composition that contains *l*-menthol, the ratio of physiological cooling agents to *l*-menthol is preferable between 2:98 and 3:2. Typically this will mean 2% to 60%, and more preferably 4% to 25% of the cooling composition will be the blend of the previously noted physiological cooling agents.

If another flavor is used in the gum, or other oral composition, beside the cooling flavor composition, the cooling flavor composition outlined above may be mixed with the other flavor. In addition, some components of the cooling flavor composition may be mixed with the other flavor, and some components added separately to the gum. However, it is preferred that any other flavor and the cooling flavor composition be premixed before being added to the gum.

Once formed, the chewing gum center can be coated. The coating is initially present as a liquid syrup which contains from 30% to 80% or 85% of the coating ingredients previously described herein, and from 15% or 20% to 70% of a solvent such as water. In general, the coating process is carried out in conventional panning equipment. Sugarless gum center tablets to be coated are placed into the panning equipment to form a moving mass.

The material or syrup which will eventually form the coating is applied or distributed over the gum center tablets. Flavors may be added before, during and after applying the syrup to the gum centers. Once the coating has dried to form a hard surface, additional syrup additions can be made to produce a plurality of coatings or multiple layers of coating.

In the panning procedure, syrup is added to the gum center tablets at a temperature range of from 37.8°C to 115.6°C (100°F to 240°F). Preferably, the syrup temperature is from 60°C to 93.3°C (140°F to 200°F). Most preferably, the syrup temperature should be kept constant throughout the process in order to prevent the polyol in the syrup from crystallizing. The syrup may be mixed with, sprayed upon, poured over, or added to the gum center tablets in any way known to those skilled in the art.

In another embodiment, a soft coating is formed by adding a powder coating after a liquid coating. The powder coating may include natural carbohydrate gum hydrolysates, maltodextrin, gelatin, cellulose derivatives, starches, modified starches, sugars, sugar alcohols, natural carbohydrate gums and fillers like talc and calcium carbonate.

Each component of the coating on the gum center may be applied in a single layer or in a plurality of layers. In general, a plurality of layers is obtained by applying single coats, allowing the layers to dry, and then repeating the process. The amount of solids added by each coating step depends chiefly on the concentration of the coating syrup. Any number of coats may be applied to the gum center Tablet. Preferably, no more than 75 coats are applied to the gum center. More preferably, less than 60 coats are applied and most preferably, 30 to 60 coats are applied. In any event, the present invention contemplates applying an amount of syrup sufficient to yield a coated chewing gum product containing 10% to 65% coating. Preferably, the final product will contain from 20% to 50% coating.

Those skilled in the art will recognize that in order to obtain a plurality of coated layers, a plurality of premeasured aliquots of coating syrup may be applied to the gum center. It is contemplated, however, that the volume of aliquots of syrup applied to the gum center may vary throughout the coating procedure.

Once a coating of syrup is applied to the gum center, the present invention contemplates drying the wet syrup in an inert medium. A preferred drying medium comprises air. Preferably, forced drying air contacts the wet syrup coating in a temperature range of from 21.1°C to 43.3°C (70°F to 110°F). More preferably, the drying air is in the temperature range of from 26.7°C to 37.8°C (80°F to 100°F). The invention also contemplates that the drying air possess a relative humidity of less than 15 percent. Preferably, the relative humidity of the drying air is less than 8 percent.

The drying air may be passed over and admixed with the syrup coated gum centers in any way commonly known in the art. Preferably, the drying air is blown over and around the syrup coated gum center at a flow rate, for large scale operations, of about 79.3m³ per minute (2800 cubic feet per minute). If lower quantities of material are being processed, or if smaller equipment is used, lower flow rates would be used. If a flavor is applied after a syrup coating has been dried, the present invention contemplates drying the flavor with or without the use of a drying medium.

The table below compares cooling intensity and bitterness intensity of various physiological cooling agents to *l*-menthol. A taste test method was developed for testing cooling agents compared to *l*-menthol. A 0.1 gram sample of cooling agent was diluted in 10 ml of food grade ethanol, and 1 ml of this solution was diluted to 100 ml with a 5% sucrose solution, giving a 100 ppm solution. A 10 ml quantity of each solution of cooling agent was kept in the mouth for 10 seconds then expectorated, and cooling and bitterness were rated as the average of "N" test subjects (initial cooling measurements). To calibrate the test subjects on the 1-10 scale, 100 ppm *l*-menthol solutions were prepared and the test subjects evaluated those first. The remaining cooling agents were evaluated in relation to *l*-menthol on the 1-10 scale. One cooling agent was evaluated per day, with fresh *l*-menthol solutions used to calibrate daily.

After reviewing the data, the following observations were made:

1. When initial cooling intensity was measured or extrapolated to equal the mean intensity of 100 ppm *l*-menthol, the cooling agents and mixtures were ranked. The cooling agents needing the lowest ppm concentration to achieve the 100 ppm *l*-menthol cooling intensity (measured or extrapolated) were given the highest cooling ranking. Lower ppm levels equate to higher cooling intensity per level of material tested-a positive attribute. Data is presented in Table 1 below.

2. When initial cooling intensity was measured or extrapolated to equal the mean intensity of 100 ppm *l*-menthol, the cooling agents that were available as single chemicals were ranked on a molar basis. The cooling agents needing the lowest molar concentration to achieve the 100 ppm *l*-menthol cooling intensity (measure or extrapolated) were given the highest cooling ranking. Lower molar levels equate to higher cooling intensity per molecule of chemical tested-a positive attributed. Data is presented in Table 1 below.

3. When bitterness was measured or extrapolated to equal the mean intensity of 100 ppm *l*-menthol, the cooling agents and mixtures that demonstrated that level of bitterness were ranked. The cooling agents needing the lowest ppm concentration to achieve the 100 ppm *l*-menthol bitterness intensity (measured or extrapolated) were given the highest bitterness ranking. Lower ppm levels equate to higher bitterness intensity per level of material tested-a negative attribute. Please note the correlation between higher levels of bitterness being associated with cooling agents having the highest cooling activity, the exceptions being WS-3 and WS-23 (high cooling, lower bitterness). Data is presented in Table 1 below.

| | | | |
|---|---|---|---|
| **Table 1** | | | |

| **COOLANT OR MIXTURE** | **COOLING INTENSITY PPM** | **COOLING INTENSITY MOLAR** | **BITTERNESS PPM** |
|---|---|---|---|
| WS-30 | 63 PPM | 2.44 X 10-4 M | 30 PPM |
| WS-3 | 65 PPM | 3.08 X 10-4 M | 330 PPM |
| *l*-ISOPULEGOL | 87 PPM | 5.65 X 10-4 M | 81 PPM |
| MENTHYL LACTATE | 95 PPM | 4.17 X 10-4 M | 78 PPM |
| *l*-MENTHOL | 100 PPM | 6.41, X 10-4 M | 100 PPM |
| MENTHONE GLYCEROL KETAL | 175 PPM | 7.87 X 10-4 M | 140 PPM |
| TCA | 185 PPM | 8.04 X 10-4 M | 160 PPM |
| WS-23 | 200 PPM | 1.17 X 10-3 M | 320 PPM |
| MENTHOL EG CARBONATE | 250 PPM | 1.02 X 10-3 M | 155 PPM |
| WS-14 | 300 PPM | 1.26 X 10-3 M | 400 PPM |
| MENTHYL SUCCINATE | 325 PPM | 1.27 X 10-3 M | 275 PPM |
| MENTHOL PG CARBONATE | 410 PPM | 1.59 X 10-3 M | 90 PPM |
| MENTHANEDIOL | 640 PPM | 3.72 X 10-3 M | 200 PPM |
| HOMOMENTHOL | 825 PPM | 5.81 X 10-3 M | 250 PPM |
| MENTHYL GLUTARATE | 950 PPM | 3.52 X 10-3 M | > 500 PPM |

In various multicomponent tests, some synergy was noted, with greater levels of cooling detected in some cooling agent combinations and with lower levels of bitterness associated with other cooling agent combinations. However, the best combinations for synergy in cooling with the lowest level of bitterness were the blends of 1) menthyl glutarate and *l*-isopulegol and 2) menthyl glutarate, *l*-isopulegol and menthanediol.

Based on the data in Table 1 above, it would take about five times more menthyl glutarate and about half as much *l*-isopulegol to equal the cooling effect of WS-23. However, as shown in the examples below, about the same level of menthyl glutarate as WS-23, along with a very low level of ispulegol and/or menthonediol, gives a similar level of coolness compared to WS-23 in hard candy and chewing gum.

### Examples:

The following sugarless candy formulations were made in the following examples (all data below are in weight percent):

The example formulations were prepared by first mixing hydrogenated isomaltulose, xylitol, acesulfame sweetener, and color in water at a level of 75-80% solids. These materials were mixed at 104.4°C to 110°C (220°-230°F) to dissolve the hydrogenated isomaltulose, xylitol, sweetener, and color in a preblend tank. The mixture was then pumped into a continuous vacuum cooker and heated to 143.3°C to 154.4°C (290-310°F) to obtain a cooked hard candy mass having about 1% moisture. The final formulations noted in Table 2 are on a dry basis. Comparative examples A, B, and C are control samples made with WS-23.

**Table 2**

| | Example A | Example 1 | Example B | Example 2 | Example C | Example 3 |
|---|---|---|---|---|---|---|
| Hydrogenated | 98.91 | 98.91 | 98.80 | 98.80 | 98.921 | 98.921 |
| isomaltulose | | | | | | |
| Xylitol | 1.03 | 1.03 | 1.02 | 1.02 | 1.025 | 1.025 |
| Acesulfame | 0.05 | 0.05 | 0.05 | 0.05 | 0.050 | 0.050 |
| Color | 0.01 | 0.01 | 0.13 | 0.13 | 0.004 | 0.004 |
| Total | 100.0 | 100.0 | 100.0 | 100.0 | 100.0 | 100.0 |

The preblended cooked mass was then pumped into an in-line mixer where the flavor, flavor extracts, aspartame sweetener, acids, and calcium lactate were added to the preblend at the levels in Table 3:

**Table 3**

| | Example A | Example 1 | Example B | Example 2 | Example C | Example 3 |
|---|---|---|---|---|---|---|
| Preblend | 97.72 | 98.70 | 98.03 | 98.02 | 98.90 | 98.88 |
| Flavor | 0.41 | 0.43 | 0.29 | 0.30 | 0.59 | 0.615 |
| Aspartame | 0.06 | 0.06 | 0.06 | 0.06 | 0.06 | 0.06 |
| Citric Acid | 1.26 | 1.26 | 1.07 | 1.07 | 0.20 | 0.20 |
| Malic Acid | 030 | 0.30 | 0.29 | 0.29 | - | - |
| Calcium | 0.10 | 0.10 | 0.10 | 0.10 | 0.10 | 0.10 |
| Lactate | | | | | | |
| Flavor extracts | 0.10 | 0.10 | 0.10 | 0.16 | 0.15 | 0.15 |
| Total | 100.0 | 100.0 | 100.0 | 100.0 | 100.0 | 100.0 |

The acids and aspartame were dissolved in water at a solids level of between 40% and 44% before addition. The preblended cooked mass was then pumped into an in-line mixer where the flavors, acids, and sweetener were added to make the final hard candy mass.

The flavor used in Examples A and 1 was a lemon/lime flavor, in Examples B and 2 was a fruit/lime flavor, and in Examples C and 3 was a mint/lemon flavor. The cooling agents used and the amounts of flavor and cooling agents in the above examples are shown below in Table 4:

**Table 4**

| | Example A | Example 1 | Example B | Example 2 | Example C | Example 3 |
|---|---|---|---|---|---|---|
| Flavor | 79.25 | 73.60 | 75.60 | 74.56 | 60.00 | 52.33 |
| *l*-Menthol | 12.25 | 11.52 | 12.60 | 12.27 | 35.00 | 32.40 |
| WS-23 | 8.50 | - | 11.80 | - | 5.00 | - |
| Menthyl glutarate | - | 13.83 | - | 13.25 | - | 8.75 |
| *l*-Isopulegol | - | 0.35 | - | 032 | - | 0.21 |
| menthanediol | - | 0.70 | - | 0.60 | - | 0.31 |

| Coolant level in candy | | | | | | |
|---|---|---|---|---|---|---|
| WS-23 | 354 ppm | - | 347 ppm | - | 297 ppm | - |
| Menthyl glutarate | - | 574 ppm | - | 400 ppm | - | 530 ppm |
| *l*-Isopulegol | - | 15 ppm | - | 10 ppm | - | 13 ppm |
| menthanediol | - | 30 ppm | - | 18 ppm | - | 20 ppm |

After cooling to about 80°C (176°F) on a cooling belt, the hard candy mass was mixed in a batch roller, then sized and cut, and cooled further for wrapping.

Sensory tests of the products, A vs. 1, B vs. 2, and C vs. 3, showed the samples to have similar cooling and flavor attributes, which was confirmed in consumer tests that demonstrated parity.

Additional hard candy samples were made as shown in Tables 5-7 by a similar process as above with slight variations in the cooling agents, sweeteners and flavor. Table 5 shows the formulas for the preblend.

**Table 5**

| | Example 4 | Example 5 | Example 6 |
|---|---|---|---|
| Hydrogenated isomaltulose | 98.915 | 98.803 | 98.922 |
| Xylitol | 1.025 | 1.024 | 1.025 |
| Acesulfame | 0.046 | 0.046 | 0.046 |
| Color | 0.014 | 0.127 | 0.007 |
| Total | 100.0 | 100.0 | 100.0 |

Table 6 shows the formulas for hard candy.

**Table 6**

| | Example 4 | Example 5 | Example 6 |
|---|---|---|---|
| Preblend | 97.50 | 97.84 | 98.68 |
| Flavor | 0.44 | 0.30 | 0.61 |
| Aspartame | 0.06 | 0.06 | 0.06 |
| Citric Acid | 1.26 | 1.07 | 0.20 |
| Malic Acid | 0.30 | 0.29 | - |
| Calcium Lactate | 0.10 | 0.10 | 0.10 |
| Flavor Extracts | 0.34 | 0.33 | 0.35 |
| Total | 100.0 | 100.0 | 100.0 |

Table 7 shows the flavor and cooling agent compositions and amounts. Example 4 is a lemon/lime flavor, Example 5 is a fruit/lime flavor, and Example 6 is a mint/lemon flavor.

**Table 7**

| | Example 4 | Example 5 | Example 6 |
|---|---|---|---|
| Flavor | 78.84 | 73,26 | 57.88 |
| *l*-Menthol | 10.79 | 12.06 | 32.48 |
| Menthyl glutarate | 8.71 | 12.32 | 8.36 |
| *l*-Isopulegol | 0.83 | 1.18 | 0.64 |
| menthanediol | 0.83 | 1.18 | 0.64 |

| Coolant level in candy: | | | |
|---|---|---|---|
| | Example 4 | Example 5 | Example 6 |
| Menthyl glutarate | 382 ppm | 376 ppm | 514 ppm |
| *l*-Isopulegol | 36 ppm | 36 ppm | 39 ppm |
| menthanediol | 36 ppm | 36 ppm | 39 ppm |

Sensory tests of the products, A vs. 4, B vs. 5, and C vs. 6, showed these to be even closer in cooling and flavor attributes than Examples 1-3, and gave better flavor and coolness attributes as ranked by consumers.

The examples of chewing gum below were made on a lab scale. The same formula was used for both the comparative examples and the inventive examples. In each example, WS-23 was replaced by approximately the same level of the blend of cooling agents. The formulas used are in Table 8. Comparative Examples D and F are peppermint flavored gums and comparative Example E is a blackcurrant flavored gum.

**Table 8**

| | Example D | Example E | Example F |
|---|---|---|---|
| Gum Base | 25.85 | 32.00 | 30.00 |
| Calcium Carbonate | - | 14.90 | 11.00 |
| Sorbitol | 49.89 | 45.48 | 49.72 |
| Glycerin | 8.24 | 1.50 | 5.50 |
| Mannitol | 5.00 | - | - |
| Coevaporated Hydrogenated | | | |
| Starch Hydrolysate/ Glycerin | 7.95 | - | - |
| Flavor | 1.24 | 1.35 | 1.70 |
| Encapsulated Sweeteners | 1.05 | 0.87 | 0.90 |
| Encapsulated Flavor | - | 1.50 | - |
| Free APM/ACK | 0.13 | - | 0.05 |
| Sodium Bicarbonate | 0.25 | - | 0.38 |
| Sodium Ascorbate | - | 1.40 | - |
| Lecithin | 0.20 | - | 0.40 |
| *l*-Menthol | 0.05 | 1.00 | 0.20 |
| WS-23 | 0.15 | - | 0.15 |
| Total | 100.0 | 100.0 | 100.0 |

Examples E and F were coated products with the following coating formulas:

**Table 9**

| | Example D | Example | Example F |
|---|---|---|---|
| Gum Center | - | 67.50 | 67.50 |
| Hydrogenated | | | |
| isomaltulose | - | 30.41 | - |
| Xylitol | - | - | 26.08 |
| Gum Talha | - | 0.80 | 2.70 |
| Calcium Carbonate | - | - | 3.20 |
| Titanium Dioxide | - | 0.33 | 030 |
| Flavor | - | 0.28 | 0.13 |
| Sweetener | - | 0.17 | - |
| Wax and talc | - | 0.11 | 0.09 |
| *l*-Menthol | - | 0.36 | - |
| WS-23 | - | 0.018 | - |
| Color | - | 0.022 | - |
| Total | | 100.0 | 100.0 |

In inventive Example 7, the 1500 ppm WS-23 in comparative Example D was replaced with 667 ppm of menthyl glutarate and 763 ppm of *l-*isopulegol. In inventive Example 8, the 180 ppm WS-23 in the coating of comparative Example E was replaced with 71 ppm of menthyl glutarate and 106 ppm of *l*-isopulegol. In inventive Example 9, the 1500 ppm WS-23 in comparative Example F was replaced with 588 ppm of menthyl glutarate and 881 ppm of *l-*isopulegol.

Bench level evaluation of these inventive examples indicated the cooling level, cooling quality, and cooling duration were similar to WS-23 for the blend of menthyl glutarate and *l*-isopulegol compared to WS-23.

## Claims

1. A confection comprising menthyl glutarate and one or more other physiological cooling agents selected from the group consisting of p-menthane-3,8-diol or a mixture of p-menthane-3,8-diol and 1-isopulegol.

2. The confection of claim 1 further comprising 1-menthol.

3. The confection of any one of claims 1 or 2 wherein the cooling agents are treated by an encapsulation process.

4. The confection of claim 3 wherein the cooling agents are encapsulated by a spray drying process.

5. The confection of claim 3 wherein the cooling agents are encapsulated by a fluid bed coating process.

6. The confection of claims 1 or 2 wherein the cooling agents are treated by being entrapped in an extrusion process.

7. The confection of any one of claims 1 to 6 wherein the confection comprises a chewing gum composition.

8. The confection of any one of claims 1 to 7 wherein the physiological cooling agents in the confection consist of menthyl glutarate, 1-isopulegol and p-menthane-3,8-diol.

9. The confection of any one of claims 1 to 8 wherein the menthyl glutarate and one or more other physiological cooling agents are present in a coating on the confection.

10. The confection of any one of claims 1 to 6 and 8 wherein the confection comprises a chewing gum composition and the menthyl glutarate and one or more other physiological cooling agents are present in a coating on the chewing gum.

11. The confection of any one of claims 1 to 10 wherein the confection comprises at least 5 ppm physiological cooling agent.

12. The confection of any one of claims 1 to 6 and 8 wherein the confection comprises a chewing gum product and the physiological cooling agents comprise at least 25 ppm of the product.

13. The chewing gum composition of claim 7 wherein the chewing gum composition comprises at least 5 ppm 1-isopulegol.

14. The confection of any one of claims 1 to 13 wherein the confection further comprises an additional physiological cooling agent selected from the group consisting of menthyl succinate; menthyl lactate; 3-1-menthoxypropane-1,2-diol; N-substituted p-menthane carboxamide; acyclic carboxamide; menthone glycerol ketals and mixtures thereof.

15. The confection of claim 14 wherein the additional physiological cooling agent is menthyl succinate.

16. A cooling flavor composition which imparts a physiological cooling effect to oral compositions in which it is used, comprising menthyl glutarate and one or more other physiological cooling agents selected from the group consisting of p-menthane-3,8-diol or a mixture of p-menthane-3,8-diol and 1-isopulegol.

17. The cooling flavor composition of claim 16 wherein the composition further comprises an additional physiological cooling agent selected from the group consisting of menthyl succinate; menthyl lactate; 3-1-menthoxypropane-1,2-diol; N-substituted p-menthane carboxamide; acyclic carboxamide; menthone glycerol ketals and mixtures thereof.

18. The cooling flavour composition of claim 17 wherein the additional physiological cooling agent is menthyl succinate.

19. The cooling flavor composition of any one of claims 16 and 17 wherein said one or more other physiological cooling agents comprise, by weight of the menthyl glutarate:
a) 2% to 50% 1-isopulegol, and
b) 2% to 50% p-menthane-3,8-diol.

20. A confection comprising a flavor and a cooling flavor composition according to any one of claims 16 to 19.

21. The cooling flavor composition of any one of claims 16 to 19 further comprising 1-menthol.

22. The cooling flavor composition of claim 21 wherein the ratio of physiological cooling agents to 1-menthol is between 2:98 and 3:2.

23. The cooling flavor composition of claim 21 wherein the ratio of physiological cooling agents to 1-menthol is between 4:96 and 1:4.

24. A coated confection, the coating comprising a coating material, menthyl glutarate and one or more other physiological cooling agents selected from the group consisting of p-menthane-3,8-diol or a mixture of p-menthane-3,8-diol and 1-isopulegol.

25. The coated confection of claim 24 further comprising menthyl succinate.

26. A chewing gum composition comprising:
a) 5% to 95% gum base;
b) 5% to 95% bulking and sweetening agent; and
c) 0.1 to about 10% flavouring agent wherein the flavouring agent comprises menthyl glutarate and one or more other physiological cooling agents selected from the group consisting of p-menthane-3,8-diol or a mixture of p-menthane-3,8-diol and 1-isopulegol.

27. The chewing gum of claim 26 further comprising menthyl succinate.

28. The confection of any one of claims 1 to 14 wherein a blend of 1-isopulegol, p-menthane-3,8-diol and menthyl glutarate are used in the confection at a ratio of menthyl glutarate to the total of 1-isopulegol and p-menthane-3,8-diol of between 20:3 and 60:3.

29. The confection of claim 28 wherein the ratio of menthyl glutarate to the total of 1-isopulegol and p-menthane-3,8-diol is about 40:3.

## Patentansprüche

1. Süßigkeit, welche Menthylglutarat und ein oder mehrere andere physiologische Kühlmittel aufweist, welche aus der Gruppe bestehend aus p-Menthan-3,8-Diol oder einem Gemisch aus p-Menthan-3,8-Diol und 1-Isopulegol ausgewählt werden.

2. Süßigkeit nach Anspruch 1, welche des Weiteren 1-Menthol aufweist.

3. Süßigkeit nach einem der Ansprüche 1 oder 2, **dadurch gekennzeichnet, dass** die Kühlmittel durch einen Verkapselungsprozess bearbeitet werden.

4. Süßigkeit nach Anspruch 3, **dadurch gekennzeichnet, dass** die Kühlmittel mit Hilfe eines Sprühtrocknungs-Prozesses verkapselt werden.

5. Süßigkeit nach Anspruch 3, **dadurch gekennzeichnet, dass** die Kühlmittel mit Hilfe eines Wirbelbettbeschichtungs-Prozesses verkapselt werden.

6. Süßigkeit nach Anspruch 1 oder 2, **dadurch gekennzeichnet, dass** die Kühlmittel bearbeitet werden, indem sie in einem Extrusionsprozess gefangen bzw. eingeschlossen sind.

7. Süßigkeit nach einem der Ansprüche 1 bis 6, **dadurch gekennzeichnet, dass** die Süßigkeit eine Kaugummi-Rezeptur bzw. -Zusammensetzung aufweist.

8. Süßigkeit nach einem der Ansprüche 1 bis 7, **dadurch gekennzeichnet, dass** sich die physiologischen Kühlmittel in der Süßigkeit aus Menthylglutarat, 1-Isopulegol und p-Menthan-3,8-Diol zusammensetzen.

9. Süßigkeit nach einem der Ansprüche 1 bis 8, **dadurch gekennzeichnet, dass** das Menthylglutarat und ein oder mehrere andere physiologische Kühlmittel in einer Beschichtung auf der Süßigkeit vorhanden sind.

10. Süßigkeit nach einem der Ansprüche 1 bis 6 und 8, **dadurch gekennzeichnet, dass** die Süßigkeit eine Kaugummi-Rezeptur bzw. -Zusammensetzung aufweist und dass das Menthylglutarat und ein oder mehrere andere physiologische Kühlmittel in einer Beschichtung auf dem Kaugummi vorhanden sind.

11. Süßigkeit nach einem der Ansprüche 1 bis 10, **dadurch gekennzeichnet, dass** die Süßigkeit mindestens 5 ppm physiologisches Kühlmittel aufweist.

12. Süßigkeit nach einem der Ansprüche 1 bis 6 und 8, **dadurch gekennzeichnet, dass** die Süßigkeit ein Kaugummiprodukt aufweist, und dass die physiologischen Kühlmittel mindestens 25 ppm des Produkts umfassen.

13. Kaugummi-Rezeptur bzw. -Zusammensetzung nach Anspruch 7, **dadurch gekennzeichnet, dass** die Kaugummi-Rezeptur bzw. -Zusammensetzung mindestens 5 ppm 1-Isopulegol enthält.

14. Kaugummi-Rezeptur bzw. -Zusammensetzung nach einem der Ansprüche 1 bis 13, **dadurch gekennzeichnet, dass** die Süßigkeit des Weiteren ein zusätzliches physiologisches Kühlmittel enthält, welches aus der Gruppe bestehend aus Menthylsuccinat, Menthyllaktat, 3-1-Menthoxypropan-1,2-Diol, N-substituiertem p-Menthancarboxamid, azyklischem Carboxamid, Menthonglycerolketalen und Gemischen daraus ausgewählt wird.

15. Süßigkeit nach Anspruch 14, **dadurch gekennzeichnet, dass** das zusätzliche physiologische Kühlmittel Menthylsuccinat ist.

16. Kühlende Geschmacksrezeptur bzw. -Zusammensetzung, welche einer in ihr verwendeten Oralzusammensetzung bzw. -rezeptur eine physiologische Kühlwirkung verleiht, wobei die kühlende Geschmacksrezeptur- bzw. -Zusammensetzung Menthylglutarat und ein oder mehrere andere physiologische Kühlmittel enthält, welche aus der Gruppe bestehend aus p-Menthan-3,8-Diol oder einem Gemisch aus p-Menthan-3,8-Diol und 1-Isopulegol ausgewählt werden.

17. Kühlende Geschmacksrezeptur bzw. -zusammensetzung nach Anspruch 16, **dadurch gekennzeichnet, dass** die Rezeptur bzw. Zusammensetzung des Weiteren ein zusätzliches physiologisches Kühlmittel enthält, welches aus der Gruppe bestehend aus Menthylsuccinat, Menthyllaktat, 3-1-Menthoxypropan-1,2-Diol, N-substituiertem p-Menthancarboxamid, azyklischem Carboxamid, Menthonglycerolketalen und Gemischen daraus ausgewählt wird.

18. Kühlende Geschmacksrezeptur bzw. -zusammensetzung nach Anspruch 17, **dadurch gekennzeichnet, dass** das zusätzliche physiologische Kühlmittel Menthylsuccinat ist.

19. Kühlende Geschmacksrezeptur bzw. -zusammensetzung nach einem der Ansprüche 16 und 17, **dadurch gekennzeichnet, dass** das eine oder die mehreren anderen physiologischen Kühlmittel nach Gewicht des Menthylglutarats Folgendes aufweisen:
a) 2% bis 50% 1-Isopulegol; und
b) 2% bis 50% p-Menthan-3,8-Diol.

20. Süßigkeit, welche einen Geschmack sowie eine kühlende Geschmacksrezeptur bzw. -zusammensetzung nach einem der Ansprüche 16 bis 19 enthält.

21. Kühlende Geschmacksrezeptur bzw. -zusammensetzung nach einem der Ansprüche 16 bis 19, welche des Weiteren 1-Menthol enthält.

22. Kühlende Geschmacksrezeptur bzw. -zusammensetzung nach Anspruch 21, **dadurch gekennzeichnet, dass** das Verhältnis der physiologischen Kühlmittel zu 1-Menthol zwischen 2:98 und 3:2 liegt.

23. Kühlende Geschmacksrezeptur bzw. -zusammensetzung nach Anspruch 21, **dadurch gekennzeichnet, dass** das Verhältnis der physiologischen Kühlmittel zu 1-Menthol zwischen 4:96 und 1:4 liegt.

24. Beschichtete Süßigkeit, wobei die Beschichtung ein Beschichtungsmaterial, Menthylglutarat und ein oder mehrere andere physiologische Kühlmittel enthält, welche aus der Gruppe bestehend aus p-Menthan-3,8-Diol oder einem Gemisch aus p-Menthan-3,8-Diol und 1-Isopulegol ausgewählt werden.

25. Beschichtete Süßigkeit nach Anspruch 24, welche des Weiteren Menthylsuccinat enthält.

26. Kaugummi-Rezeptur bzw. -Zusammensetzung, welche Folgendes aufweist:
a) 5% bis 95% Kaugummi-Basis;
b) 5% bis 95% Füll- bzw. Quellstoffe und Süßstoffe; und
c) 0,1% bis ungefähr 10% Aromastoff, wobei der Aromastoff Menthylglutarat und ein oder mehrere andere physiologische Kühlmittel enthält, welche aus der Gruppe bestehend aus p-Menthan-3,8-Diol oder einem Gemisch aus p-Menthan-3,8-Diol und 1-Isopulegol ausgewählt werden.

27. Kaugummi nach Anspruch 26, welcher des Weiteren Menthylsuccinat enthält.

28. Süßigkeit nach einem der Ansprüche 1 bis 14, **dadurch gekennzeichnet, dass** ein Gemisch aus 1-Isopulegol, p-Menthan-3,8-Diol und Menthylglutarat in der Süßigkeit in einem Verhältnis von Menthylglutarat zu der Gesamtmenge von 1-Isopulegol und p-Menthan-3,8-Diol von zwischen 20:3 und 60:3 verwendet wird.

29. Süßigkeit nach Anspruch 28, **dadurch gekennzeichnet, dass** das Verhältnis von Menthylglutarat zu der Gesamtmenge von 1-Isopulegol und p-Menthan-3,8-Diol ungefähr 40:3 beträgt.

## Revendications

1. Confiserie comprenant du glutarate de menthyle et un ou plusieurs agents rafraîchissants physiologiques choisis dans le groupe consistant en le p-menthane-3,8-diol ou un mélange de p-menthane-3,8-diol et de l-isopulégol.

2. Confiserie selon la revendication 1, comprenant en outre du 1-menthol.

3. Confiserie selon l'une quelconque des revendications 1 et 2, dans laquelle les agents rafraîchissants sont traités par un processus d'encapsulation.

4. Confiserie selon la revendication 3, dans laquelle les agents rafraîchissants sont encapsulés par un procédé de séchage par pulvérisation.

5. Confiserie selon la revendication 3, dans laquelle les agents rafraîchissants sont encapsulés par un procédé d'enrobage à lit fluide.

6. Confiserie selon la revendication 1 ou 2, dans laquelle les agents rafraîchissants sont traités en étant piégés dans un processus d'extrusion.

7. Confiserie selon l'une quelconque des revendications 1 à 6, dans laquelle la confiserie comprend une composition de chewing-gum.

8. Confiserie selon l'une quelconque des revendications 1 à 7, dans laquelle les agents rafraîchissants physiologiques dans la confiserie se composent de glutarate de menthyle, l-isopulégol et p-menthane-3,8-diol.

9. Confiserie selon l'une quelconque des revendications 1 à 8, dans laquelle le glutarate de menthyle et un ou plusieurs autres agents rafraîchissants physiologiques sont présents dans un enrobage sur la confiserie.

10. Confiserie selon l'une quelconque des revendications 1 à 6 et 8, dans laquelle la confiserie comprend une composition de chewing-gum et le glutarate de menthyle et un ou plusieurs autres agents rafraîchissants physiologiques sont présents dans un enrobage sur le chewing-gum.

11. Confiserie selon l'une quelconque des revendications 1 à 10, dans laquelle la confiserie comprend au moins 5 ppm d'agent rafraîchissant physiologique.

12. Confiserie selon l'une quelconque des revendications 1 à 6 et 8, dans laquelle la confiserie comprend un produit de chewing-gum et les agents rafraîchissants physiologiques comprennent au moins 25 ppm du produit.

13. Composition de chewing-gum selon la revendication 7, dans laquelle la composition de chewing-gum comprend au moins 5 ppm de l-isopulégol.

14. Confiserie selon l'une quelconque des revendications 1 à 13, dans laquelle la confiserie comprend en outre un agent rafraîchissant physiologique additionnel choisi dans le groupe consistant en le succinate de menthyle; le lactate de menthyle; le 3-1-menthoxypropane-1,2-diol; le p-menthane carboxamide N-substitué; le carboxamide acyclique; les cétals de menthone glycérol et leurs mélanges.

15. Confiserie selon la revendication 14, dans laquelle l'agent rafraîchissant physiologique additionnel est le succinate de menthyle.

16. Composition aromatisée rafraîchissante qui communique un effet rafraîchissant physiologique à des compositions orales dans lesquelles elle est utilisée, comprenant du glutarate de menthyle et un ou plusieurs autres agents rafraîchissants physiologiques choisis dans le groupe consistant en le p-menthane-3,8-diol ou un mélange de p-menthane-3,8-diol et de l-isopulégol.

17. Composition aromatisée rafraîchissante selon la revendication 16, dans laquelle la composition comprend en outre un agent rafraîchissant physiologique additionnel choisi dans le groupe consistant en le succinate de menthyle; le lactate de menthyle; le 3-1-menthoxypropane-1,2-diol; le p-menthane carboxamide N-substitué; le carboxamide acyclique; les cétals de menthone glycérol et leurs mélanges.

18. Composition aromatisée rafraîchissante selon la revendication 17, dans laquelle l'agent rafraîchissant physiologique additionnel est le succinate de menthyle.

19. Composition aromatisée rafraîchissante selon l'une quelconque des revendications 16 et 17, dans laquelle lesdits un ou plusieurs autres agents rafraîchissants physiologiques comprennent, en poids du glutarate de menthyle:
a) 2 % à 50 % de l-isopulégol, et
b) 2 % à 50 % de p-menthane-3,8-diol.

20. Confiserie comprenant un arôme et une composition aromatisée rafraîchissante selon l'une quelconque des revendications 16 à 19.

21. Composition aromatisée rafraîchissante selon l'une quelconque des revendications 16 à 19, comprenant en outre du l-menthol.

22. Composition aromatisée rafraîchissante selon la revendication 21, dans laquelle le rapport entre les agents rafraîchissants physiologiques et le l-menthol est compris entre 2:98 et 3:2.

23. Composition aromatisée rafraîchissante selon la revendication 21, dans laquelle le rapport entre les agents rafraîchissants physiologiques et le l-menthol est compris entre 4:96 et 1:4.

24. Confiserie enrobée, l'enrobage comprenant une matière d'enrobage, du glutarate de menthyle et un ou plusieurs autres agents rafraîchissants physiologiques choisis dans le groupe consistant en le p-menthane-3,8-diol ou un mélange de p-menthane-3,8-diol et de l-isopulégol.

25. Confiserie enrobée selon la revendication 24, comprenant en outre du succinate de menthyle.

26. Composition de chewing-gum comprenant:
a) 5 % à 95 % de gomme base;
b) 5 % à 95 % d'agent diluant et édulcorant; et
c) 0,1 à environ 10 % d'agent aromatisant, où l'agent aromatisant comprend du glutarate de menthyle et un ou plusieurs autres agents rafraîchissants physiologiques choisis dans le groupe consistant en p-menthane-3,8-diol ou un mélange de p-menthane-3,8-diol et de l-isopulégol.

27. Chewing-gum selon la revendication 26, comprenant en outre du succinate de menthyle.

28. Confiserie selon l'une quelconque des revendications 1 à 14, dans laquelle un mélange de l-isopulégol, p-menthane-3,8-diol et glutarate de menthyle est utilisé dans la confiserie à un rapport entre glutarate de menthyle et le total de l-isopulégol et de p-menthane-3,8-diol compris entre 20:3 et 60:3.

29. Confiserie selon la revendication 28, dans laquelle le rapport entre glutarate de menthyle et le total de l-isopulégol et de p-menthane-3,8-diol est d'environ 40:3.
